# EUROPÄISCHE PATENTSCHRIFT

(11) **EP 1 916 432 B1**
(45) Veröffentlichungstag und Bekanntmachung des Hinweises auf die Patenterteilung: **23.03.2011**
(21) Anmeldenummer: 07020607.3
(22) Anmeldetag: 22.10.2007
(51) Int. Cl.: F16D 1/076

(54) **Wellenverbindung und Unterlegprofil für eine solche**
Shaft connection and underlay profile for such
Liaison d'arbre et profil d'arrêt destiné à celle-ci

(30) Priorität: 24.10.2006 DE 102006049970
(43) Veröffentlichungstag der Anmeldung: 30.04.2008
(73) Patentinhaber: Voith Turbo GmbH & Co. KG, 89522 Heidenheim (DE)
(72) Erfinder: Wöhrle, Bernd, 89518 Heidenheim (DE); Ritter, Simon, 89441 Medlingen (DE); Grawenhof, Peter, 89547 Dettingen (DE)
(74) Vertreter: Schmidt, Sven Hendrik

(56) Entgegenhaltungen:
- WO-A1-86/00118
- WO-A1-02/066847
- WO-A1-02/066848
- DE-A1- 3 613 692
- DE-A1- 19 911 814
- US-A- 4 840 409

## Beschreibung

Die Erfindung betrifft eine Wellenverbindung, insbesondere zum Zusammenbau einer Kreuzgelenkwelle, beispielsweise von deren Anschlussflansch mit einem Wellenmittelteil, wobei das letztere beispielsweise entweder eine Gelenkgabel oder das Kreuzgelenkwellenmittelteil sein kann, wie im weiteren noch erläutert wird.

Wellen, beispielsweise Gelenkwellen, beziehungsweise einzelne Axialabschnitte von solchen werden in der Regel mittels eines Flansches und einer Flanschverschraubung mit einem entsprechenden Flansch einer weiteren Welle, eines weiteren Axialabschnittes der Welle oder einem anderen Bauteil drehfest verbunden. Unter Welle im Sinne der vorliegenden Beschreibung werden dabei nicht nur drehbare beziehungsweise rotierende Wellen verstanden, sondern auch nicht umlaufende Achsen.

Im Bereich des stoffschlüssigen Anschlusses des Flansches, der bezogen auf die Welle beziehungsweise Teilwelle (den einzelnen axialen Abschnitt der Welle) ein Wellenende ausbildet, mit dem Mittelteil der Welle ist häufig eine Aussparung beziehungsweise eine Einschnürung zur Unterbringung der Flanschverschraubung vorgesehen, oder wenigstens ein bogenförmiger Übergang von dem Mittelteil der Welle auf die dem Wellenende abgewandte Stirnseite des Flansches, auch wenn der letztere radial nach außen über den Wellenmittelteil hinaussteht.

Im Bereich dieser Aussparung beziehungsweise des bogenförmigen Übergangs treten bei Betriebsbelastung der Welle, das heißt bei Aufbringung einer Torsions-, Zug- und/oder Biegebelastung, erhöhte Spannungskonzentrationen auf. Diese resultieren aus der Überlagerung von Torsions-, Zug- und/oder Biegespannungen.

Damit die Schraubenköpfe oder Muttern der Flanschverschraubung vollflächig auf der dafür am Flansch stirnseitig vorgesehenen Anlagefläche aufliegen können, nachdem die Flanschverschraubung angezogen worden ist, muss die Aussparung beziehungsweise der bogenförmige Übergang derart gestaltet sein, dass die notwendige Größe der ebenen Schraubenauflagefläche geschaffen wird und zugleich die Montierbarkeit insbesondere mit hydraulischem Schraubenanzugswerkzeug gewährleistet ist. Die Anschlussflanschgestaltung einer entsprechenden Wellenverbindung gemäß dem Stand der Technik (z.B. WO 02/066847 A1) ist in der Figur 1 dargestellt.

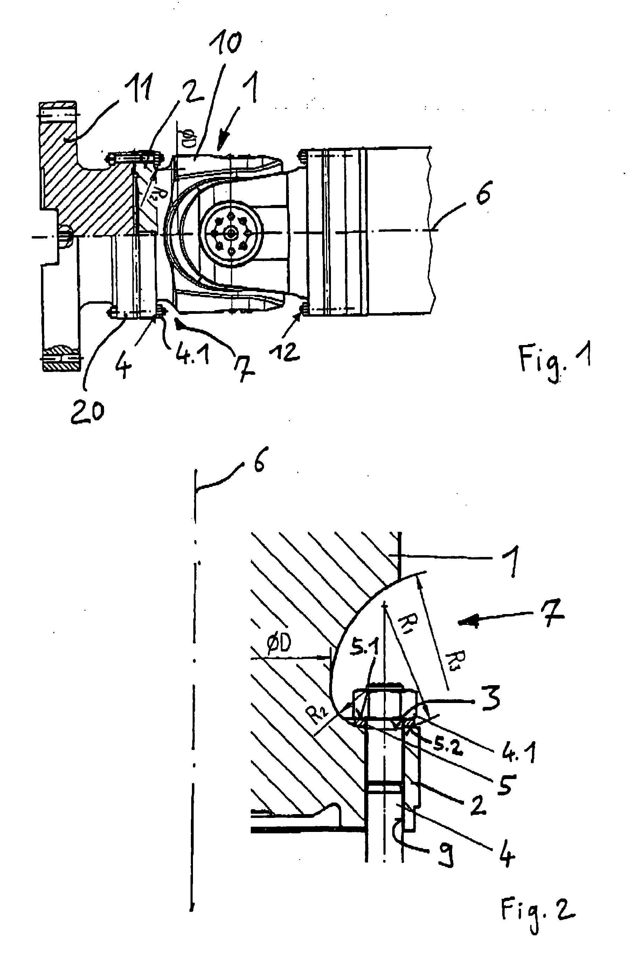

Wie man sieht, weist der Anschlussflansch auf einer dem axialen Ende der Welle abgewandten Stirnseite, die radial innerhalb einer Aussparung positioniert ist, und an welcher die Muttern einer Flanschverschraubung anliegen, eine senkrecht auf der Längsachse der Welle stehende, ebene Anschlussfläche auf, welche eine tiefe Aussparung und einen kleinen Radius vom Übergang der bogenförmigen Kontur der Aussparung auf die senkrechte Anschlussfläche bedingt. Der kleine Radius hat auf die maximale Belastbarkeit der Wellenverbindung einen entscheidenden Einfluss, nämlich im Hinblick auf die dort wirksamen Spannungen und damit auf die Drehmomentübertragungskapazität der Welle, in der Figur 1 in Form einer Gelenkwelle. Die Haupteinflussgrößen sind dabei der aus der Tiefe der Aussparung resultierende minimale Durchmesser D der Welle im Bereich der Aussparung und die Größe des kleinsten Radius R₂, vorliegend Kerbradius genannt.

Insbesondere bei einer Flanschverschraubung mit großen Schraubendurchmessern ergibt sich ein ungünstig kleiner Aussparungsdurchmesser D und kleiner Kerbradius R₂. Sollte man den Kerbradius R₂ vergrößern wollen, so würde sich hierdurch ein noch geringerer Aussparungsdurchmesser D ergeben, was in der Gesamtwirkung im Hinblick auf die auftretenden Spannungen unverändert ungünstig ist.

Die Dokumente DE 199 11 814 A1, US 4 840 409 A, DE 36 13 692 A1 und WO 86/00118 A1 beschreiben Unterlegscheiben für Schraubverbindungen, wobei die Unterlegscheiben eine ebene und eine konische Seite aufweisen.

Der vorliegenden Erfindung liegt die Aufgabe zugrunde, eine Wellenverbindung insbesondere für eine Kreuzgelenkwelle anzugeben, mittels welcher die im Anschluss eines Flansches an ein Wellenmittelteil auftretenden Spannungen bei Betriebsbelastungen der Welle vermindert werden und damit die Betriebssicherheit und die Bauteillebensdauer erhöht werden, Insbesondere soll die Wellenverbindung zum Anschluss einer Gabel einer Kreuzgelenkwelle an deren Anschlussteil oder deren Kreuzgelenkwellenmittelteil mittels einer Flanschverschraubung und insbesondere mittels zwei Flanschen geeignet sein.

Die erfindungsgemäße Aufgabe wird durch eine Wellenverbindung mit den Merkmalen von Anspruch 1 gelöst. Die abhängigen Ansprüche beschreiben vorteilhafte und besonders zweckmäßige Ausgestaltungen der Erfindung.

Die Erfinder haben eine einfache, zuverlässige wie gleichfalls wirksame Möglichkeit erkannt, die Kontur des Übergangs zwischen einem Anschlussflansch an einem Wellenende zu einem stoffschlüssig mit dem Wellenende verbundenen Wellenmittelteil zu gestalten, um einerseits auftretende Kerbspannungen zu minimieren und andererseits gleichzeitig eine im wesentlichen oder vollständig vollflüchige Auflage von Muttern oder Schraubenköpfen der Flanschverschraubung an dem Anschlussflansch zu ermöglichen, so dass keine zusätzlichen Biegebelastungen in der Flanschverschraubung auftreten.

Der Anschlussflansch der erfindungsgemäßen Wellenverbindung erstreckt sich, wie herkömmliche Anschlussflansche, wenigstens teilweise in Umfangsrichtung der Welle und weist eine Anlagefläche für Schraubenköpfe oder Muttern einer Flanschverschraubung auf. Die Anlagefläche dient der Aufnahme einer Druckkraft, welche über die Schraubenköpfe oder Muttern beim Verspannen der Flanschverschraubung zum drehfesten Anschluss des Wellenendes mit einer anderen Welle oder einem anderen Bauteil erzeugt wird.

Im Gegensatz zum Stand der Technik ist die Anlagefläche des Anschlussflansches selbst, welche in der Regel senkrecht oder im wesentlichen senkrecht auf der Längsachse der Welle steht, nicht eben sondern konkav gestaltet. Um trotzdem ein vollflächiges oder im wesentlichen vollflächiges Anliegen der Schraubenköpfe oder Muttern im angezogenen (gespannten) Zustand zu ermöglichen, ist ein Unterlegprofil vorgesehen, das zwischen die Mutter beziehungsweise den Schraubenkopf und der Anlagefläche des Flansches eingespannt wird, und durch welches sich die Schraube beziehungsweise der Schraubenschaft der Flanschverschraubung erstreckt. Das Unterlegprofil weist eine erste, wenigstens im Bereich der Anlage des Schraubenkopfes beziehungsweise der Mutter ebene Oberfläche und eine zweite, entgegengesetzt zu der ersten Oberfläche angeordnete zweite Oberfläche auf, wobei die letztere wenigstens teilweise oder vollständig komplementär zu der konkav gestalteten Anlagefläche im Anschlussflansch ausgestaltet ist und somit eine konvexe Kontur aufweist. Die konvexe Kontur kann entweder im Querschnitt (im Axialschnitt durch das Unterlegprofil) bogenförmig oder winklig gestaltet sein, je nach gewählter Kontur der Anlagefläche des Anschlussflansches, im Axialschnitt durch die Welle beziehungsweise das entsprechende Wellenende gesehen. Das Unterlegprofil hat somit den Zweck, die zur Erzielung einer niedrigen Kerbspannung im Bereich der Anlagefläche und dem Übergang vom Anschlussflansch zum Wellenende vorgesehene, von einer Ebenen abweichende Kontur auszugleichen, so dass trotz der von der Ebene abweichenden Kontur für die Flanschverschraubung eine ebene Anlagefläche zur Verfügung steht.

Die konkave Gestaltung der Anlagefläche des Anschlussflansches ist derart vorgesehen, dass sich die Wölbung oder die winkelförmige Aussparung, mit welcher die Konkavität hergestellt wird, in Form einer Rinne in Umfangsrichtung der Welle, insbesondere einteilig und vorteilhaft mit konstantem Querschnitt und/oder rotationssymmetrisch zur Längsachse der Welle entlang des gesamten Anschlussflansches beziehungsweise entlang der gesamten Längen einzelner Anschlussflanschsegmente erstreckt. Somit wird in Umfangsrichtung der Welle über den gesamten Anschlussflansch eine kerbarme Geometrie erzielt, im Unterschied zu einzelnen in Umfangsrichtung mit Abstand zueinander angeordneten örtlichen Aussparungen, um eine Vielzahl von einzelnen konkaven Formen zu erreichen.

Die Erfindung soll nachfolgend anhand von Ausführungsbeispielen einer Wellenverbindung in einer Kreuzgelenkwelle und von Unterlegprofilen exemplarisch erläutert werden.

Es zeigen:
- Figur 1: den Anschluss eines Kreuzgelenkes an das Anschlussteil (links in der Figur 1) beziehungsweise an ein Kreuzgelenkwellenmittelteil (rechts in der Figur 1) mittels einer herkömmlichen Wellenverbindung;
- Figur 2: einen Axialschnitt durch den Bereich einer erfindungsgemäß ausgeführten Wellenverbindung, wie sie beispielsweise bei einer Kreuzgelenkwelle gemäß der Figur 1 vorgesehen werden kann;
- Figur 3: eine zu der Figur 2 alternativ gestaltete Wellenverbindung mit einem entsprechend alternativ gestalteten erfindungsgemäßen Unterlegprofil gemäß einer vorzuziehenden Ausführung mit einer Selbstzentrierung;
- Figur 4: eine dreidimensionale Ansicht einer erfindungsgemäß ausgeführten Wellenverbindung mit einem pro Schraube der Flanschverschraubung vorgesehenen einzelnen Unterlegprofil;
- Figur 5: eine Ausführung ähnlich der Figur 4, jedoch mit ringsegmentförmigen Unterlegprofilen für jeweils eine Vielzahl von Schrauben der Flanschverschraubung.

Obwohl in der Figur 1 eine Ausführung gemäß dem Stand der Technik dargestellt ist, soll sie zum besseren Verständnis der Begriffe der vorliegenden Erfindung kurz erläutert werden, da sie ferner eine Anwendungsmöglichkeit für eine erfindungsgemäße Ausgestaltung einer Wellenverbindung beziehungsweise eines Unterlegprofils darstellt. Links in der Figur 1 erkennt man ein beliebig an das Gelenk angrenzendes Anschlussteil 11 einer Kreuzgelenkwelle, das einen Flansch 20 aufweist, der mit dem Flansch 2 des axialen Endabschnittes (oder allgemein Gabelabschnittes) der Kreuzgelenkwelle mittels einer Flanschverschraubung 4 drehfest verbunden ist. Die Muttern 4.1 der Flanschverschraubung 4 ragen wenigstens teilweise in eine Aussparung beziehungsweise Einschnürung 7 hinein. Die Einschnürung 7 ist vorgesehen, um eine ebene Fläche an dem dem Flansch 20 abgewandten stirnseitigen Ende des Flansches 2 auszubilden, auf welcher die Muttern 4.1 vollflächig aufliegen.

Im Sinne der Beschreibung der vorliegenden Erfindung stellt die am Anschlussteil 11 durch die Flanschverschraubung 4 angeschlossene Gabel die Welle 1 dar, und der Flansch 2 bildet das axiale Wellenende dieser Welle 1 aus, das mit einer weiteren Welle oder einem weiteren Bauteil, vorliegend dem Anschlussteil 11 der Kreuzgelenkwelle links in der Figur 1, drehfest verbunden werden soll. Als Mittelteil 10 der Welle 1 wird zur Unterscheidung von dem Wellenende (Flansch 2) jener Bereich der Gabel bezeichnet, der über die Einschnürung 7 stoffschlüssig mit dem Flansch 2 verbunden ist. Der verwendete Begriff Mittelteil ist somit von dem üblicherweise für Kreuzgelenkwellen verwendeten Begriff "Kreuzgelenkwellenmittelteil" zu unterscheiden, da dieser Kreuzgelenkwellenmittelteil jener axiale Abschnitt der Kreuzgelenkwelle ist, der rechts in der Figur 1 dargestellt ist, und an den sich in der Regel am entgegengesetzten axialen (nicht dargestellten) Ende ein weiteres Kreuzgelenk mit zwei Gelenkgabeln anschließt.

Selbstverständlich ist es auch möglich, die rechts in der Figur 1 gezeigte Flanschverschraubung 12, mittels welcher der Kreuzgelenkwellenmittelteil mit einer Gelenkgabel verbunden ist, erfindungsgemäß auszugestalten.

In der Figur 2 ist nur der Ausschnitt der Einschnürung 7 einer erfindungsgemäß ausgeführten Wellenverbindung dargestellt, und zwar in einem Axialschnitt durch die Welle 1. Sich entsprechende Bezugszeichen sind in den verschiedenen Figuren sich entsprechenden Bauteilen zugeordnet.

Wie man in der Figur 2 erkennen kann, ist die Anlagefläche 3 für die Muttern 4,1 der Flanschverschraubung 4 des Anschlussflansches 2 nicht eben, sondern konkav ausgeführt, so dass ein Hohlraum zwischen der Mutter 4.1 und der Anlagefläche 3 des Flansches 2 beim Anziehen entstehen würde, wenn nicht das Unterlegprofil 5 vorgesehen wäre. Dieser Hohlraum würde sich dann in Form einer Rinne über den gesamten Umfang der Welle und die gesamte Anlagefläche erstrecken. Anstelle der gezeigten Ausführung der Flanschverschraubung 4 mit einem Gewindestift beziehungsweise einer Stiftschraube und einer Mutter 4.1 kann auch eine Schraube mit einem Schraubenkopf anstelle der Mutter 4.1 vorgesehen sein.

Das Unterlegprofil 5 weist zwei entgegengesetzt zueinander und im wesentlichen (abgesehen von der konvexen Kontur auf der einen Seite) parallel zueinander angeordneten Oberflächen 5.1 und 5.2 auf. Die erste Oberfläche 5,1, welche der Mutter 4.1 der Flanschverschraubung 4 zugewandt ist, und an welcher die Mutter 4.1 mit ihrer Unterseite vollflächig oder im wesentlichen vollflächig anliegt, ist vollständig oder zumindest im Bereich der Anlage der Mutter 4.1 eben ausgeführt. In der Regel wird eine Vielzahl von Schrauben und Muttern 4.1 einer Flanschverschraubung 4 vorgesehen sein, so dass entsprechend viele ebene Bereiche auf der ersten Oberfläche 5.1 vorgesehen sind, sofern diese nicht vollflächig eben ausgebildet ist.

Mit der zweiten Oberfläche 5.2 liegt das Unterlegprofil 5 im Bereich der konkaven Anlagefläche 3 an dem Anschlussflansch 2 an. Bei der gezeigten Ausführung ist die zweite Oberfläche 5.2 des Unterlegprofils 5 vollständig komplementär zu der Anlagefläche 3 ausgestaltet. Gemäß einer alternativen, nicht dargestellten Ausführung kann die Oberfläche 5.2 auch nur an einzelnen Punkten oder Flächen an der Anlagefläche 3 anliegen und ist demnach nur teilweise komplementär zu der Anlagefläche 3 gestaltet.

Durch den Einsatz des Unterlegprofils 5 als Unterlage für die Muttern 4.1 der Flanschverschraubung 4 gelingt es, die Parameter zur Beschreibung einer optimierten Kontur im Bereich der Einschnürung 7 so zu wählen, dass sich die Spannungskonzentration in der Wellenverbindung im Vergleich zum Stand der Technik reduziert, Die Kontur wird bestimmt durch den kleinsten Durchmesser D der Einschnürung 7, sowie durch die Radien, beispielsweise R₁, R₂ und R₃, welche vorzugsweise tangential ineinander übergehen. Das Zentrum von R₁ liegt dabei auf der verlängerten Achse der Flanschverschraubung 4 beziehungsweise der einzelnen Durchgangsbohrungen 9 in dem Flansch 2, durch welche die Schrauben der Flanschverschraubung 4 hindurchgeführt sind.

Die Anlagefläche 3 ist somit in ihrer Kontur im Axialschnitt durch die Welle 1 im wesentlichen kreissegmentförmig mit dem Radius R₁ gestaltet. Die zweite Oberfläche 5.2 des Unterlegprofils 5 weist in etwa oder genau denselben Krümmungsradius R₁ auf. Die erste Oberfläche 5.1 erstreckt sich hingegen in einer Ebene senkrecht zur Längsachse 6 der Welle 1 beziehungsweise senkrecht zur Achse der einzelnen Schrauben der Flanschverschraubung 4. Selbstverständlich ist es möglich, einzelne oder alle Radien R₁, R₂ und R₃ durch beliebige Kurven zu ersetzen oder eine andere Anzahl von Radien vorzusehen, um die Kontur der Einschnürung 7 und der Anlagefläche 3 im Axialschnitt durch die Welle 1 zu gestalten.

Die Anlagefläche 3 muss nicht (abgesehen von der konkaven Form) vollständig senkrecht gegenüber der Längsachse 6 der Welle 1 beziehungsweise des Wellenendes (bei einer gekrümmten Welle) ausgerichtet sein, sondern kann auch einen abweichenden Winkel gegenüber der Längsachse, beispielsweise zwischen 60° und 120°, 80° und 100° oder 85° und 95° aufweisen.

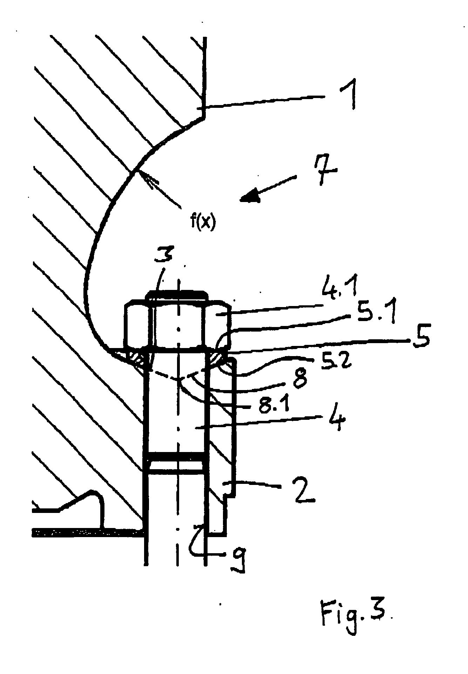

Während bei der Ausführung gemäß der Figur 2 die Einschnürung 7 in einem Axialschnitt durch die Welle 1 vorteilhaft eine bogenförmige Kontur aufweist, die frei von Ecken ist, und welche nicht nur bis in die Auflagefläche 3 und somit unter das Unterlegprofil 5 beziehungsweise die Mutter 4.1 reicht, sondern sich sogar vollständig durch die Anlagefläche 3 hindurch beziehungsweise unter dem Unterlegprofil 5 hindurch und vorteilhaft über diese/dieses hinaus erstreckt, ist gemäß der Figur 3 eine Ausführungsform dargestellt, bei welcher die Kontur der Einschnürung 7 im Axialschnitt durch die Welle 1 zunächst einen bogenförmigen Abschnitt aufweist, welcher in einen Winkel 8 im Bereich der Anlagefläche 3 übergeht, wobei die Spitze 8.1 des Winkels 8 auf einem Durchmesser des Anschlussflansches 2 positioniert ist, auf welchem die Mitten der einen oder der Vielzahl von Durchgangsbohrungen 9 durch den Anschlussflansch 2 für die Flanschverschraubung 4 positioniert sind. Die Spitze 8.1 liegt, insofern sie sich in Umfangsrichtung der Welle erstreckt, auf einem derart großen Durchmesser der Welle 1 beziehungsweise des Anschlussflansches 2, dass keine ungünstige Kerbwirkung erzielt wird. Ferner ist es möglich, die Anlagefläche 3 im Bereich der einzelnen Schrauben der Flanschverschraubung 4 derart kegelförmig zu gestalten, im Gegensatz zu einer in Umfangsrichtung des Flansches 2 umlaufenden Spitze 8.1 des Winkels, dass die Spitzen 8.1 des Winkels 8 ausschließlich im Bereich der Durchgangsbohrungen 9 und insbesondere dem Mittelpunkt derselben angeordnet sind, so dass die eigentliche Anlagefläche 3 um die einzelnen Bohrungen 9 herum frei von jeglichen Winkeln oder Spitzen ist. Man könnte somit die Kontur der Anlagefläche 3 im Axialschnitt durch die Welle 1 um die einzelnen Durchgangsbohrungen 9 herum auch als kegelstumpfförmig bezeichnen.

Die in der Figur 3 dargestellte Ausführungsform ermöglicht eine Selbstzentrierung des Unterlegprofils 5 beim Anziehen der Flanschverschraubung 4 in radialer Richtung und/oder in Umfangsrichtung des Anschlussflansches 2.

Wie man insbesondere aus den Figuren 2 und 3 erkennen kann, kann die Krümmung der Kontur der Einschnürung 7 im Vergleich zum Stand der Technik (Figur 1) unabhängig von der Mutternauflagefläche mit größeren Radien beziehungsweise Bögen gestaltet werden, ohne den Innendurchmesser D der Einschnürung 7 zu vermindern oder den Außendurchmesser des Flansches 2 zu vergrößern.

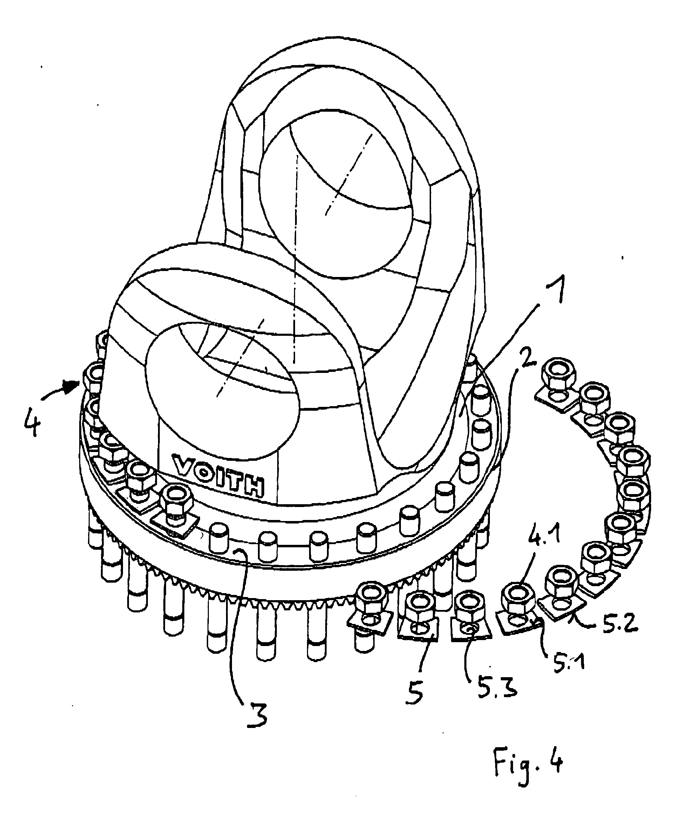

In der Figur 4 ist ein Ausführungsbeispiel für die Anordnung von Unterlegprofilen 5 dargestellt, bei welcher je Schraube der Flanschverschraubung 4 ein einzelnes Unterlegprofil 5 mit einer entsprechenden ersten Oberfläche 5.1, die hier vollständig eben ausgeführt ist, und einer zweiten entgegengesetzt hierzu angeordneten Oberfläche 5.2, die konvex ausgeführt ist, vorgesehen ist. Die einzelnen Unterlegprofile 5 sind mit Abstand zueinander in Umfangsrichtung der Welle 1 beziehungsweise des Anschlussflansches 2 im Bereich der Anlageflächen 3 oder anliegend aneinander angeordnet. Obwohl einzelne Unterlegprofile 5 vorgesehen sind, erstreckt sich die Konkavität in der Anlagefläche 3 einstückig und insbesondere rotationssymmetrisch und/oder konzentrisch zur Längsachse der Welle 1 über den gesamten Umfang der Welle 1.

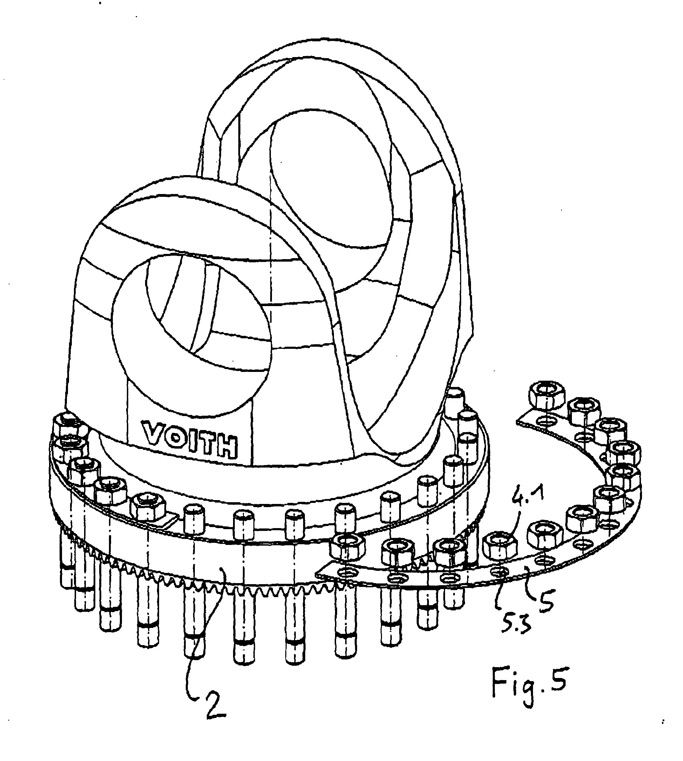

Die Figur 5 entspricht weitgehend der Figur 4. Gemäß der Figur 5 sind die Unterlegprofile 5 jedoch in Form von Ringsegmenten gestaltet, weiche jeweils eine Vielzahl von Durchgangsbohrungen 5.3 aufweisen, so dass ein einzelnes Ringsegment 5 der Unterlage unter einer Vielzahl von Muttern 4.1 dient. Anstelle der gezeigten bogenförmigen Ringsegmente, die sich über einen Winkel von 180° erstrecken, so dass über dem Umfang des Anschlussflansches 2 zwei Ringsegmente vorgesehen sind, kann auch eine andere Teilung der Ringsegmente vorgesehen sein, beispielsweise 4, 6 oder 8 Ringsegmente über dem gesamten Umfang des Anschlussflansches 2. Bei einer Ausführung, bei der sich lediglich ein im Verhältnis zur Flanschplatte dünnerer vorgeschalteter Querschnitt erstreckt, ist es auch möglich, ein einzelnes Vollringsegment vorzusehen. Ferner ist es möglich, einzelne Ringsegmente nach dem umschließenden Aufbringen auf die Welle 1 miteinander stoffschlüssig zu verbinden, beispielsweise zu verschweißen, so dass sie ein Vollringsegment darstellen.

## Patentansprüche

1. Wellenverbindung, insbesondere für eine Kreuzgelenkwelle,
1.1 mit einem axialen Wellenende einer Welle (1), das einen Anschlussflansch (2) zum drehfesten Anschließen der Welle (1) an eine weitere Welle oder ein anderes Bauteil aufweist;
1.2 der Anschlussflansch (2) erstreckt sich wenigstens teilweise in Umfangsrichtung der Welle (1) und weist eine Anlagefläche (3) für Schraubenköpfe oder Muttern (4.1) einer Flanschverschraubung (4) auf, zur Aufnahme von Druckkraft von den Schraubenköpfen oder Muttern (4.1) beim verspannenden Verschrauben des Anschlussflansches (2) mittels der Flanschverschraubung (4) mit der anderen Welle oder dem anderen Bauteil;
**dadurch gekennzeichnet, dass**
1.3 die Anlagefläche (3) mittels einer Wölbung oder einem Winkel konkav gestaltet ist, wobei sich die Wölbung oder der Winkel in der Anlagefläche (3) rinnenartig in Umfangsrichtung der Welle (1) erstreckt, und ein Unterlegprofil (5) mit einer ersten wenigstens teilweise ebenen Oberfläche (5.1) und einer zweiten, entgegengesetzt zu der ersten Oberfläche (5.1) angeordneten zweiten, wenigstens teilweise zur Anlagefläche (3) komplementär gestalteten konvexen Oberfläche (5.2) vorgesehen ist, und das Unterlegprofil (5) beim Anziehen der Flanschverschraubung (4) zwischen dem Schraubenkopf oder der Mutter (4.1) und der Anlagefläche (3) einspannbar oder eingespannt ist.

2. Wellenverbindung gemäß Anspruch 1, **dadurch gekennzeichnet, dass** die Anlagefläche (3) in einem Axialschnitt durch die Welle (1) gesehen im wesentlichen senkrecht oder winklig, insbesondere mit einem Winkel zwischen 60° und 120°, oder 80° und 100°, oder 85° und 95°, auf der Längsachse (6) der Welle (1) oder des Wellenendes steht.

3. Wellenverbindung gemäß Anspruch 2, **dadurch gekennzeichnet, dass** sich in Axialrichtung der Welle (1) vom Wellenende und Anschlussflansch (2) in Richtung einer Wellenmitte gesehen, eine Einschnürung (7) unmittelbar an dem Anschlussflansch (2) anschließt, innerhalb von welcher die Flanschverschraubung (4) in Radialrichtung der Welle (1) oder des Wellenendes teilweise oder vollständig aufgenommen ist.

4. Wellenverbindung gemäß Anspruch 3, **dadurch gekennzeichnet, dass** die Einschnürung (7) in einem Axialschnitt durch die Welle (1) eine bogenförmige Kontur, insbesondere frei von Ecken, aufweist, welche bis in die Anlagefläche (3) oder vollständig durch diese hindurch, insbesondere in Radialrichtung der Welle (1) über diese hinaus reicht.

5. Wellenverbindung gemäß Anspruch 3, **dadurch gekennzeichnet, dass** die Einschnürung (7) in einem Axialschnitt durch die Welle (1) eine bogenförmige Kontur aufweist, welche in einen Winkel (8) im Bereich der Anlagefläche (3) übergeht, wobei die Spitze (8.1) des Winkels (8) auf einem Durchmesser des Anschlussflansches (2) positioniert ist, auf welchem die Mitten von einer oder mehreren Durchgangsbohrungen (9) durch den Anschlussflansch (2) für die Flanschverschraubung (4) positioniert sind.

6. Wellenverbindung gemäß einem der Ansprüche 1 bis 5, **dadurch gekennzeichnet, dass** sich das Unterlegprofil (5) in Umfangsrichtung des Anschlussflansches (2) über eine Vielzahl von Schrauben der Flanschverschraubung (4) hinweg erstreckt, und insbesondere die Form eines kreisrunden Ringsegments aufweist, insbesondere mit einem Winkelbogen von 180°.

7. Wellenverbindung gemäß einem der Ansprüche 1 bis 6, **dadurch gekennzeichnet, dass** die gesamte erste Oberfläche (5.1) des Unterlegprofils (5) eben ausgebildet ist.

8. Wellenverbindung gemäß einem der Ansprüche 1 bis 7, **dadurch gekennzeichnet, dass** die zweite Oberfläche (5.2) des Unterlegprofils (5) und die Anlagefläche (3) derart komplementär gestaltet sind, dass eine Selbstzentrierung des Unterlegprofils (5) auf der Anlagefläche (3) beim Anziehen der Flanschverschraubung (4) erreicht wird.

## Claims

1. A shaft connection, in particular for a cardan shaft,
1.1 with an axial shaft end of a shaft (1), which comprises a flange connection (2) for torque-proof connection of the shaft (1) to another shaft or another component;
1.2 the flange connection (2) extends at least partially in the circumferential direction of the shaft (1) and comprise a lay-on surface (3) for screw heads or nuts (4.1) of a flange bolting connection (4), for absorbing the compression force exerted by the screw heads or nuts (4.1) when bracingly screwing the flange connection (2) by means of the flange bolting connection (4) with the other shaft or the other component;
**characterised in that**
1.3 the lay-on surface (3) is concave in shape by means of a camber or an angle, whereas the camber or the angle in the lay-on surface (3) extends in the form of grooves in the circumferential direction of the shaft (1), and a shimming profile (5) with a first at least partially level surface (5.1) and a second convex surface (5.2) arranged opposite to the first surface (5.1) at least partially complementary to the lay-on surface (3) and the shimming profile (5) can be clamped in or is clamped in when tightening the flange bolting connection (4) between the screw head and the nut (4.1) and the lay-on surface (3).

2. A shaft connection according to claim 1, **characterised in that** the lay-on surface (3) is substantially vertically or angularly as seen in an axial section through the shaft, in particular with an angle between 60° and 120°, or 80° and 100°, or 85° and 95°, on the longitudinal axis (6) of the shaft (1) or of the shaft end.

3. A shaft connection according to claim 2, **characterised in that** a narrowing (7) connects directly on the flange connection in axial direction of the shaft (1) from the shaft end and flange connection (2) as seen in the direction of a shaft centre, inside which the flange bolting connection (4) is accommodated partially or completely in radial direction of the shaft (1) or of the shaft end.

4. A shaft connection according to claim 3, **characterised in that** the narrowing (7) in an axial section through the shaft (1), exhibits a bow-shaped contour, in particular exempt of corners, which penetrates into the lay-on surface (3) or runs therethrough completely, in particular in radial direction of the shaft (1), to protrude therefrom.

5. A shaft connection according to claim 3, **characterised in that** the narrowing (7) in an axial section through the shaft (1), comprises a bow-shaped contour which turns into an angle (8) in the region of the lay-on surface (3), wherein the tip (8.1) of the angle (8) is positioned on a diameter of the flange connection (2), on which the centres are positioned from one or several through-bores (9) through the flange connection (2) for the flange bolting connection (4).

6. A shaft connection according to any of the claims 1 to 5, **characterised in that** the shimming profile (5) extends in the circumferential direction of the flange connection (2) via a plurality of screws of the flange bolting connection (4), and exhibits in particular the form of a circular ring segment, in particular with an angular bow of 180°.

7. A shaft connection according to any of the claims 1 to 6, **characterised in that** the whole first surface (5.1) of the shimming profile (5) is level.

8. A shaft connection according to any of the claims 1 to 7, **characterised in that** the second surface (5.2) of the shimming profile (5) and the lay-on surface (3) are complementary in shape in such a way that a self-centring of the shimming profile (5) on the lay-on surface (3) is achieved when tightening the flange bolting connection (4).

## Revendications

1. Liaison arbre de transmission, en particulier pour un arbre de transmission à joint de cardan,
1.1 pourvue d'une extrémité d'arbre axiale d'un arbre (1), l'extrémité présentant une bride de fixation (2) permettant le raccordement avec blocage en rotation de l'arbre (1) au niveau d'un autre arbre ou d'un autre composant;
1.2 la bride de fixation (2) s'étend au moins partiellement dans le sens de la circonférence de l'arbre (1) et présente une surface d'appui (3) pour têtes de vis ou écrous (4.1) d'une fixation à bride (4), destinée à recevoir la force de compression exercée par les têtes de vis ou écrous (4.1) pendant le vissage haubanage de la bride de fixation (2) à l'aide du raccord à bride (4) avec l'autre arbre ou l'autre composant;
**caractérisée en ce que**
1.3 la surface d'appui (3) est de forme concave à l'aide d'un bombement ou d'un angle, tandis que le bombement ou l'angle dans la surface d'appui (3) s'étend en forme de gorge dans le sens de la circonférence de l'arbre (1), et un profilé de calage (5) est prévu, disposant d'une première surface (5.1) au moins partiellement plane et d'une seconde surface (5.2) groupée opposée à la première surface (5.1) et au moins partiellement et de forme complémentaire et convexe de la surface d'appui (3) et le profilé de calage peut être serré ou bien est serré en même temps que l'on serre le raccord à bride (4) entre la tête de vis ou l'écrou (4.1) et la surface d'appui (3).

2. Liaison arbre de transmission conforme à la revendication 1, **caractérisée en ce que** la surface d'appui (3), vue dans une coupe axiale à travers l'arbre, est plus ou moins verticale ou angulaire, en particulier avec un angle compris entre 60° et 120°, ou bien 80° et 100° ou encore 85° et 95°, sur l'axe longitudinal (6) de l'arbre (1) ou de l'extrémité d'arbre.

3. Liaison arbre de transmission conforme à la revendication 2, **caractérisée en ce qu'**un rétrécissement (7) se raccorde immédiatement à la bride de fixation (2) dans la direction axiale de l'arbre (1), vu depuis l'extrémité d'arbre et de la bride de fixation (2) en direction d'un milieu de l'arbre, à l'intérieur duquel le raccord à bride (4) est logé partiellement ou complètement dans la direction radiale de l'arbre (1) ou de l'extrémité d'arbre.

4. Liaison arbre de transmission conforme à la revendication 3, **caractérisée en ce que** le rétrécissement (7) présente un contour arqué, en particulier exempt de coins, selon une coupe axiale à travers l'arbre (1), qui pénètre la surface d'appui (3) ou bien traverse cette dernière complètement, en particulier dans la direction radiale de l'arbre (1) pour en saillir.

5. Liaison arbre de transmission conforme à la revendication 3, **caractérisée en ce que** le rétrécissement (7) présente un contour arqué selon une coupe axiale à travers l'arbre (1), qui se transforme en un angle (8) dans la zone de la surface d'appui (3), tandis que la pointe (8.1) de l'angle (8) est positionnée sur un diamètre de la bride de fixation (2), sur laquelle les centres sont positionnés à partir d'un ou de plusieurs alésages traversants (9) à travers la bride de fixation (2) pour le raccord à bride (4).

6. Liaison arbre de transmission selon l'une des revendications 1 à 5, **caractérisée en ce que** le profilé de calage (5) s'étend dans le sens de la circonférence de la bride de fixation (2) par le biais d'une pluralité de vis du raccord à bride (4), et présente en particulier la forme d'un segment annulaire orbiculaire, en particulier avec un secteur angulaire de 180°.

7. Liaison arbre de transmission selon l'une des revendications 1 à 6, **caractérisée en ce que** la totalité de la première surface (5.1) du profilé de calage (5)est de forme plane. '

8. Liaison arbre de transmission selon l'une des revendications 1 à 7, **caractérisée en ce que** la seconde surface (5.2) du profilé de calage (5) et la surface d'appui (3) sont de forme complémentaire de telle sorte que l'on obtient un autocentrage du profilé de calage (5) sur la surface d'appui (3) lorsque l'on serre le raccord à bride (4).
